# EUROPEAN PATENT SPECIFICATION

(11) **EP 1 679 979 B1**
(45) Date of publication and mention of the grant of the patent: **26.11.2008**
(21) Application number: 04790412.3
(22) Date of filing: 14.10.2004
(51) Int. Cl.: A23L 1/234, A23F 5/46, A23L 1/226

(54) **SULFUR COMPOUNDS FOR ENHANCING COFFEE AROMA AND RESULTANT PRODUCTS CONTAINING SAME**
SCHWEFELVERBINDUNGEN FÜR DIE VERBESSERUNG DES AROMAS VON KAFFEE, SOWIE DIE DIESE ENTHALTENDEN PRODUKTE
COMPOSES DE SOUFRE POUR RENFORCER L'AROME DU CAFE ET PRODUITS OBTENUS LES CONTENANT

(30) Priority: 20.10.2003 EP 03024173
(43) Date of publication of application: 19.07.2006
(73) Proprietor: Nestec S.A., 1800 Vevey (CH)
(72) Inventor: KERLER, Josef, CH-1009 Pully (CH); LIARDON, Rémy, CH-1010 Lausanne (CH); POISSON, Luigi, CH-2000 Neuchâtel (CH)
(74) Representative: Schuller, Cornelis
(86) International application number: PCT/EP2004/011556
(87) International publication number: WO 2005/039313

(56) References cited:
- GB-A- 2 116 823
- US-A- 3 773 524
- US-A- 4 041 186
- PATENT ABSTRACTS OF JAPAN vol. 2003, no. 01, 14 January 2003 (2003-01-14) & JP 2002 265979 A (SANEI GEN FFI INC), 18 September 2002 (2002-09-18)
- HOFMANN T ET AL: "Identification of potent aroma compounds in thermally treated mixtures of glucose/cysteine and rhamnose/cysteine using aroma extract dilution techniques" JOURNAL OF AGRICULTURAL AND FOOD CHEMISTRY, AMERICAN CHEMICAL SOCIETY. WASHINGTON, US, vol. 45, no. 3, March 1997 (1997-03), pages 898-906, XP002160151 ISSN: 0021-8561
- SANZ C, CZERNY M, CID C, SCHIEBERLE P: "Comparison of potent odorants in a filtered coffee brew and in an instant coffee beverage by aroma extract dilution analysis (AEDA)" EUR. FOOD RES. TECHNOL., vol. 214, 2002, pages 299-302, XP002316148
- KUMAZAWA K ET AL: "Investigation of the change in the flavor of a coffee drink during heat processing" BIOSIS, April 2003 (2003-04), XP002273781
- HOLSCHER W ET AL: "New sulfur-containing aroma-impact compounds in roasted coffee" FSTA, 1992, XP002273782

## Description

### TECHNICAL FIELD

The invention relates to methods and uses of straight chain C₄-C₅ mercapto-alkanones to increase the organoleptic properties of a coffee flavor provided in a food or beverage, and to foods and beverages containing them.

### BACKGROUND ART

Aromas are an important part of many products since consumers associate certain aromas with certain products. If the product lacks the aroma associated with it, consumer perception of the product is adversely affected. This is particularly a problem in the field of soluble coffee powders, and beverages and food products containing coffee flavor or aroma, although it also exists in other fields. Soluble coffee powders, which are obtained from commercial processes involving extraction, concentration, and drying are usually substantially aroma-less. For this reason, it is conventional to recover coffee aromas which are given off during the processing of the soluble coffee powder and to reincorporate these aromas into concentrated coffee extract prior to the drying of the soluble coffee powder.

Coffee aromas are typically recovered at several points during processing of the soluble coffee powder, e.g. by steam stripping of the coffee extract prior to concentration and drying of the soluble coffee solids.

Examples of aroma recovery processes are disclosed in U.S. Pat. No. 3,535,118 and in international patent application WO 97/10721. One of the problems perceived to arise with these processes is that not all components of the aroma obtained in a cup of freshly brewed coffee are captured during processing. Some aroma components are lost; components which would, if incorporated into instant coffee powder, improve the aroma of a beverage prepared from the instant coffee powder. Further, many of the conventional recovery techniques damage or alter the aroma components or the aroma compounds are degraded during storage of recovered aqueous aroma, which is often in contact with coffee extract or solids.

Various patents disclose certain flavoring compositions or aroma extraction processes. U.S. Patent No. 3,540,889 discloses enhancing the flavor of soluble coffee by adding a known compound, methyl mercaptan, to coffee percolate prior to drying.

U.S. Patent No. 3,713,848 discloses processes for altering the flavor of foodstuffs by adding at least one branched-chain alkanethiol to alter the flavor of foodstuffs. The flavor provided is stated to be a roasted meat flavor, exemplified by rendered pork fat or chicken fat character, some of which also have the character of roasted onions.

U.S. Patent No. 3,773,524 discloses the use of certain α-ketothiols, particularly 2-mercapto-3-butanone, to provide a meat flavor and aroma to foodstuffs.

U.S. Patent No. 3,873,746 discloses a novel process for producing aromatized coffee using a synthetic coffee aroma composition by reacting methyl mercaptan with an excess of carbonyl compounds, providing further processing, and adding the reactant to a coffee product.

U.S. Patent No. 3,892,878 discloses altering the flavor of foodstuffs using an alkane dithiol, mercaptoalkanol, alkane dimercapto sulfide, or alkane hydroxy mercapto sulfide of the specified formula to provide primarily meat, liver, onion, and/or garlic flavors particularly for meat and poultry flavor compositions, as well as dairy and fruit flavors.

U.S. Patent No. 4,224,351 discloses cyclohexanone-thiols and their use as perfuming and odor-modifying agents in perfumes, and as flavoring and taste modifying agents, including enhancing the roasted and/or torrified notes of natural or instant coffee.

U.S. Patent No. 4,378,380 discloses combining known coffee flavorants including methyl mercaptan, a molar excess of carbonyl compounds, and furfuryl mercaptan with soluble coffee solids or coffee like solids powdered foodstuffs.

U.S. Patent No. 4,024,289 discloses enhancing the fruity flavors of foodstuffs using one of several a-oxy(oxo)mercaptans including 2-mercapto-3-pentanone.

GB Patent Application 2 116 823A discloses the use of 4-methyl-4-mercapto-2-pentanone to enhance the flavor of foodstuffs, including coffee.

JP Publication 2001-128620 teaches recovered flavors for producing coffee and tea drinks under aseptic conditions. The flavor ingredient is recovered when a juice, coffee, or tea drink is concentrated. The recovered flavor is then combined with one or more compounds listed in the publication, including methional, methylmercaptan, furfurylmercaptan, 3-mercapto-3-methylbutyl formate, 2-isobuty-3-methoxypyrazine, furaneol, sotolon, 2,3-butanedione, 2,3-pentanedione, damascenone, guaiacol, 4-vinylguaiacol, vanillin, (Z)-1,5-octadien-3-one, 4-methoxy-2-methyl-2-butanethiol, and 4-mercapto-4-methyl-2-pentanone, and used to the same type of tea or coffee drink. Coffee flavors including furfuryl thiol or 3-mercapto-3-methyl butyl formate are specifically disclosed.

International Publication No. WO 02/076239 teaches a process for stabilizing aroma-providing components such as coffee aroma against loss or degradation of desirable flavor or aroma characteristics during storage. A stabilizing agent is included with the aroma-providing components to chemically interact with undesirable compounds to form a stable aroma-providing component.

Even in spite of various perfuming, flavoring, and aroma compounds, as well as various coffee products with improved aromas, there is still a need for recovered or compounded coffee aromas that can be provided in amounts sufficient to increase the organoleptic properties of a coffee flavor provided in a food or beverage.

### SUMMARY OF THE INVENTION

The invention relates to the use of an aroma-providing substance in an amount sufficient to increase the organoleptic properties of a coffee flavor provided in a food or beverage. The aroma-providing substance provides a portion of the flavors or aroma obtained from or that existed in freshly brewed coffee. It has now been found that certain straight chain mercapto alkanones are surprisingly effective when used alone or in admixture in increasing the organoleptic properties of a coffee flavoring. Certain of these compounds have been proposed as additives for providing meat flavours to foods, and it was to be unexpected that they have the property of increasing the organoleptic properties of a coffee flavor.

Accordingly, in a first embodiment, the invention provides the use of an aroma-providing substance in an amount sufficient to increase the organoleptic properties of a coffee flavor provided in a food or beverage, characterized in that the aroma-providing substance is a straight chain C₄ -C₅ mercapto-alkanone or a mixture of two or more thereof. The straight C₄ -C₅ mercapto-alkanone is preferably one or more of 3-mercapto-2-butanone, 2-mercapto-3-pentanone and 3-mercapto-2-pentanone.

The invention also relates to methods for increasing the organoleptic properties of a coffee flavor provided in a food or beverage which comprises providing a food or beverage and adding or incorporating at least one isolated or synthetised aroma-providing substance in the food or beverage in an amount sufficient to increase the coffee flavor thereof, characterized in that the aroma-providing substance is a straight chain C₄ -C₅ mercapto alkanone or a combination of two or more thereof. The invention further relates to a food or beverage having enhanced organoleptic properties and obtained by this method.

In one embodiment, the consumable component includes a food or beverage product incorporating a reconstitutable beverage, ready-to-drink beverage, alcoholic beverage, dough-based product, frozen confectionery product, chocolate or analogue thereof, cereal, or a spreadable dairy product or dairy substitute, or any mixture thereof.

Each of the embodiments described above is equally applicable to the food or beverage and the method of the invention.

### DETAILED DESCRIPTION OF THE PREFERRED EMBODIMENTS

Based on the fundamental analytical investigation of coffee flavour, 5 sulfur compounds have been identified for the first time in coffee (see also Table 1, Example 1), among which certain advantageous straight chain C₄ -C₅ mercapto-alkanones . Quantitative analysis of coffee brew and soluble coffee (obtained from the same coffee blend) revealed that 3-mercapto-2-butanone, the mixture of 3-mercapto-2-pentanone and 2-mercapto-3-pentanone, and 4-methoxy-2-methyl-butane-2-thiol are present in significantly higher concentrations in the brew. Besides coffee isolated containing the said sulfur compounds, nature identical versions of these compounds can be used in e.g. concentrations that relate to the difference found between a coffee brew and the corresponding soluble coffee. These compounds are surprisingly useful in preparing food products and beverages having an enhanced or reinforced coffee flavor. Preferred mercapto-alkanones are 3-mercapto-2-butanone, 2-mercapto-3-pentanone, 3-mercapto-2-pentanone and mixtures of two or more thereof. Ideally, the mercapto-alkanones are used in an amount effective to impart a catty-sulfury, fruity, roasty, odor character to increase the freshly brewed coffee organoleptic properties of the food or beverage.

One or more of the mercapto-alkanones is preferably used in an amount sufficient to increase the organoleptic properties of a coffee flavor provided in a food or beverage by the addition or incorporation of a soluble coffee powder therein. Preferably, the mercapto-alkanones replace flavors or aromas that are at least partially removed or destroyed during conventional preparation of soluble coffee powders. The aroma-providing compounds are typically added to soluble coffee powder, and when so added the compounds are typically incorporated or added to the food or beverage in an amount sufficient to increase the coffee flavor thereof.

The aroma-providing substances may be synthesized or may be isolated by available techniques well known to those of ordinary skill in the art, including those described in U.S. Patent Nos. 6,455,093 and 6,592,922, each of which is incorporated herein by express reference thereto. These aroma-providing substances are present in and may be recovered from coffee grounds in fairly small amounts, so care should be taken in isolating the aroma-providing compounds to avoid contaminating them with other compounds that might dilute, modify, or react with them. Preferably, each aroma-providing substance compound isolated is at least substantially pure.

It will often be desirable to use additional aroma-providing substances in combination with the mercapto-alkanones to modify the aroma properties of the food or beverage. Thus, the mercapto-alkanones provide a catty-sulfury, fruity, roasty, odor which is particularly complemented by the blackcurrent-sulfury and fruity notes provided by 4-methoxy-2-methylbutan-2-thiol. Accordingly, in a preferred embodiment, one or more of the straight chain C₄ -C₅ mercapto-alkanones is used in combination with 4-methoxy-2-methylbutan-2-thiol and/or with one or more of the compounds 4-mercapto-4-methyl-2-pentanone, methional, and 4-mercapto-4-methylbutyl formate.

For certain foods or beverages, it might even be useful to mix the mercapto-alkanones with additional coffee aroma substances such as bis-(methylthio)methane, 1-methylthio-1-ethanethiol, 3-mercapto-3-methylbutan-2-one, any of the known key aroma compounds present in coffee, such as sulfur compounds, pyrazines, guaiacols, furanones, aldehydes and diketones, and mixtures of two or more of these.

The identity of the mercapto-alkanones in coffee can be confirmed by those of ordinary skill in the art using, *e.g*., mass spectra, gas chromatography, gas chromatography/olfactometry, odor quality, RI indices, co-chromatography of references, or the like, or combinations thereof.

The aroma-providing mercapto-alkanones used in the invention may be employed in the preparation of any type of food or beverage available to those of ordinary skill in the art. Ideally, preparation includes combining a consumable component, such as a food or beverage product, with a sufficient amount of aroma-providing mercapto-alkanone compound or compounds to increase the coffee flavor of the food product or beverage to the desired level. A "consumable component" is typically a food or beverage product, including for example, a reconstitutable beverage, coffee mixes, ready-to-drink beverage, alcoholic beverage, dough-based product, frozen confectionery product, chocolate or analogue thereof, cereal, or a spreadable dairy product or dairy substitute, or any mixture thereof.

Beverages that may be prepared according to the invention include any coffee-flavored drinks or drinks having a coffee aroma or flavor, such as ready-to-drink coffee beverages, powdered coffee beverages, coffee-flavored liquors, coffee-flavored wine coolers or mixed drinks, fresh milk, reconstitutable milk, or other types of milks with coffee flavor, carbonated soft drinks having coffee flavor, or the like; or any combination thereof.

Food products that may be prepared according to the invention to have an increased coffee flavor include desserts, such as dough-based products including cakes, cookies, brownies, and coated or uncoated sugar wafers; frozen confectionery products including water ices and ice creams; chocolates, chocolate analogues, or other non-frozen confectionery products, or the like; cereal; grits; biscuits; bagels; muffins; biscotti; pastas; spreadable foods or other dairy or non-dairy materials, such as cheese, cream cheese, yogurt, butter, margarine, nut-based spreads including peanut butter, and the like; and any combination thereof. In one embodiment, the food or beverage product is a coffee or coffee-related product, *e.g*., fresh brewed coffee, soluble coffee powders, 3-in-1 powdered coffees including powdered milk and creamer, iced coffee, espresso, or the like.

What is a sufficient amount of aroma-providing substance will vary depending *inter alia* on least the type of substance or substances included, the mixture and the strength of coffee flavor desired, the strength of flavor already present from other coffee-flavored components, the amount of food or beverage product present, and the type of food or beverage being prepared, as will be readily apparent to those of ordinary skill in the art. Cost considerations, as well as processing, transport, and storage conditions, may also play a factor in determining what is a sufficient amount. However, it is preferred the isolated or synthetised aroma-providing substance is present in an amount effective to impart a catty-sulfury, fruity, roasty, odor character to increase the freshly brewed coffee organoleptic properties of the food or beverage. Similarly, when including the isolated or synthetised aroma-providing substance in mixture with 4-methoxy-2-methylbutan-2-thiol and/or one or more of the compounds 4-mercapto-4-methyl-2-pentanone, methional, and 4-mercapto-4-methylbutyl formate, it is preferred to use it in an amount effective to impart a fruity, blackcurrent-sulfury odor character to increase the freshly brewed coffee organoleptic properties of the food or beverage. Suitable amounts of the isolated or synthetised aroma-providing substance(s) may vary from about 0.004 ppb to about 1 ppm of a typical food product or beverage, but are preferably below 0.5 ppm, for example, 0.5 ppb to 0.4 ppm of the food product or beverage.

It is known that aromas derived from coffee itself are unstable, and various efforts to isolate them, including some conventional methods, are described in this application. Since the aroma-providing compound(s) of the invention can be synthesized or extracted from coffee itself, they can then surprisingly and unexpectedly be provided into a food or beverage, or even a coffee beverage itself, in an amount greater than that found naturally in coffee. This provides the ability to approximately to use a concentration of the aroma-providing compounds of the invention that is 50-220 times higher compared to freshly brewed natural coffee, when combined into a food or beverage product. Thus, as a portion of the aroma destabilizes over time or are masked by the coffee matrix and/or other aroma compounds, there is a sufficient amount remaining in the food or beverage product to provide at least the equivalent amount of compounds found in a fresh brewed coffee aroma or flavor so that a suitable organoleptic coffee character can still be obtained.

Any commercially available method may be used to ensure suitable stability of the aroma-providing substance while combining them into a food or beverage product, and subsequently. One particularly suitable technique includes encapsulation of the aroma providing compound(s), either separately or in any combination. Encapsulation can be accomplished by any suitable technology available to those of ordinary skill in the art, e.g., spray-drying, freeze drying or extrusion, or a combination thereof.

The aroma-providing substance will typically be provided with one or more carriers to facilitate manipulation, stability, as well as combination with the selected food or beverage product. A particularly suitable carrier includes one or more carbohydrate materials, preferably including a carbohydrate polymer. As an example, maltodextrins such as 33DE corn syrup solids (Glucidex IT33) with or without 5% MCT oil can act as a suitable carrier for the aroma-providing substance or other such labile substances.

It should also be understood that a flavoring adjuvant such as a flavoring agent or flavor intensifier including one or more conventional components can be used with the aroma-providing substance of the invention. Examples include saturated or unsaturated fatty acids, and amino acids; alcohols, such as primary and secondary alcohols; esters; carbonyl compounds including aldehydes and ketones; lactones; cyclic organic materials including benzene derivatives such as guaiacols; alicyclics; heterocyclics such as furans, pyridines, pyrazines, furanones and the like; other sulfur-containing materials including conventional types of thiazoles, thiols, sulfides, disulfides, and the like; flavor potentiators, such as monosodium glutamate, guanylates, inosinates; natural and synthetic flavorants, such as vanillin, natural gums, and the like; spices; herbs; essential oils and extracts including anise and oils thereof, alkanet root extract, bay leaves, capsicum extract, and the like; and any combinations thereof.

The specific flavoring adjuvant can be solid, liquid, or both, depending on the desired ultimate amounts and form of the food or beverage product to which the aroma compounds of the invention will be provided. In one preferred embodiment, any flavoring adjuvant and aroma providing substance is dispersed, admixed, or the like to provide at least a substantially homogeneous medium. The selection of a flavoring adjuvant, if any, and the quantity thereof, will depend on the precise organoleptic character desired in the final food or beverage product having the coffee aroma providing substance used according to the invention.

The invention also relates to packaging for such consumable products. The consumable product, such as a food or beverage product, or a combination thereof, can be prepared and provided with the aroma-providing compound(s) and consumable component already combined or in separate containers. For example, where the consumable component is a powder or other solid form, and the aroma-providing substance is in liquid, pasty, oily or other flowable form, it might be desirable to keep them apart but preferably adjacent. In one embodiment, the aroma-providing substance and consumable component are provided in adjacent compartments separated by a removable barrier. In a preferred embodiment, the removable barrier is breakable in place to permit combination of the aroma-providing substance and the consumable component. In another embodiment, at least a portion of one is in a solid or powdered form and at least a portion of the other is liquid to facilitate combination thereof. The barrier can also simply be removable or openable to permit the separated portions to combine, either with or without additional assistance. Gravity or shaking may also be employed to facilitate combination of separated components. For example, the liquid portion can be in a compartment above the solid or powdered portion so that the liquid can fall and mix with the solid or powdered portion after the barrier between them is eliminated. In the case of a permanent barrier, one portion can be added into the compartment of the other by any suitable mechanism such as a spoon, a feed line optionally connected to a pump (e.g., an atomizer to spray liquid over the solid or powdered component), or the like. Any conventional permanent or removable barrier system can be used that is available to those of ordinary skill in the art. This separation of the aroma-providing compound(s) from the consumable food or beverage product until just prior to use, when implemented, can advantageously provide a significantly longer shelf-life and/or provide significantly stronger organoleptic characteristics of freshly brewed coffee. Without being bound by theory, it is believe this is facilitated by minimizing or avoiding the instability that can arise when the aroma-providing substance is in longer-term contact with the consumable component.

In the case of a food or beverage product, the consumable component is an edible component that can include any food or edible substance suitable for consumption. By "edible" is meant anything suitable for digestive consumption including, e.g. chewing gums and the like in addition to conventional foods that are eaten for nourishment or pleasure, or both. These products usually have, but need not have, nutritional value. Preferably, these food or beverage products include anything categorized as generally recognized as safe ("GRAS") by the FDA. The edible component can be in the form of a liquid, powder, or solid, or a combination thereof such as a spread or paste or with distinct portions having these separate phase forms. In the case of a food or beverage product, the consumable product of the invention can be available as a ready-to-use, ready-to-eat or -drink, ready-to-bake, or raw ingredient that requires further action such as cooking or mixing with other edible substances before use by a consumer.

The following examples are provided as illustration of the analytical and sensorial results obtained with the aroma providing sulfur compounds.

### Example 1

### Identification and quantification of aroma providing sulfur compounds in coffee.

New sulfur compounds were identified in concentrated aroma fractions that were obtained from roasted and ground coffee by different stripping techniques (e.g. use of cryogenic condenser fraction obtained through process described in U.S. Pat. No. 3,535,118). The concentrated aroma fractions were dissolved in dichloromethane and analysed by means of gc/olfactometry. For gc/ms analysis, sulfur compounds were isolated and purified according to Tominaga et al. (1998) J. Agric. Food Chem. 46, 1044-1048*.* The newly identified sulfur compounds in coffee are shown in Table 1 and Figure 1. The identification of the compounds 1-3 and 5 was based on retention indices (relative to n-alkanes) on two to three columns of different polarity, co-chromatography of references and odour quality on the sniffing port as well as mass spectrometry. Thiols 4 and 6 were yet tentatively identified based on all criteria mentioned above except mass spectra.

### Quantification of sulphur compounds in coffee brew and soluble coffee.

Coffee brew (from 300g roast and ground Arabica coffee, CTn 90 roast degree) was spiked with the labeled isotope d3-3-mercapto-2-pentanone (internal standard), distilled under high vacuum and extracted with dichloromethane. Isolation and derivatisation of thiols with p-hydroxymercuribenzoate was carried out in accordance to above mentioned reference. Thiols 1-3 (Table 1) were quantified by gc/ms, thiol 5 by gc/gc/ms. Results are summarized in Table 2.

**Table 1 Identification of new sulphur compounds in coffee aroma fractions and coffee brew**

| no. | aroma compound | odour Quality | RI-value on column | | |
|---|---|---|---|---|---|
| | | | DB-5 | DB-1701 | DB-Wax |
| 1 | 3-mercapto-2-butanone | sulfury, catty | 820 | --- | 1269 |
| 2 | 3-mercapto-2-pentanone | sulfury, catty | --- | 1015 | 1355 |
| 3 | 2-mercapto-3-pentanone | sulfury, catty | --- | 1011 | 1348 |
| 4 | 4-methoxy-2-methylbutan-2-thiol | blackcurrant | 926 | 989 | 1221 |
| 5 | 4-mercapto-4-methylpentan-2-one | sulfury, fruity | 959 | 1069 | 1400 |

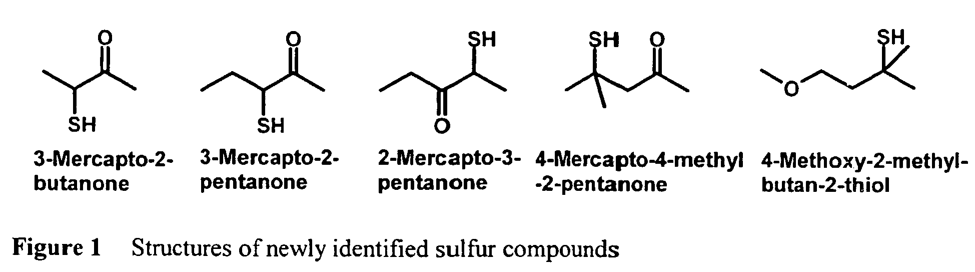

**Table 2 Concentrations (ppb) of new sulphur compounds in coffee brew (100% Arabica blend. CTn 90)**

| aroma compound | concentration (ppb) |
|---|---|
| 3-mercapto-2-butanone | 4.1 |
| 2/3-mercapto-3/2-pentanone* | 8.1 |
| 4-methoxy-2-methylbutan-2-thiol | 0.02 |

| | |
|---|---|
| * Mixture of 2-mercapto-3-pentanone and 3-mercapto-2-pentanone | |

### Example 2

Sensory evaluations of soluble coffees w and w/o the aroma providing substances 3-mercapto-2-butanone and 3-mercapto-2-pentanone were performed. To demonstrate the superior impact of the aroma providing substances of this invention, soluble coffees spiked with other sulfur compounds such as 4-methoxy-2-methylbutan-2-thiol as well as with methional and 4-mercapto-4-methylbutyl formate were also evaluated (analysis revealed also a higher concentration of these compounds in coffee brew compared to soluble coffee).

This example describes the use of a mixture of the aroma providing substances and their impact on the sensory profile of a soluble coffee (100% Arabica, CTn 90). A stock solution consisting of 3-mercapto-2-butanone and 3-mercapto-2-pentanone was prepared in ethanol and diluted in water to such an extend that final concentration of ethanol in the coffee sample did not exceed 50 mg/l water (thus having no impact on the sensory profile). This provided **mixture I**. In addition, two other mixtures **(mixtures II** containing 4-methoxy-2-methylbutan-2-thiol, and **mixture III** containing methional and 4-mercapto-4-methylbutyl formate), consisting of known sulfur compounds was prepared as described above. The amounts of mixtures I, II and III that were added to the soluble coffee for sensory evaluations are summarized in **Table 3.** These amounts were optimized through a number of sensory experiments and provided us with the most desired sensory effects.

**Table 3 Amounts (µg) of sulphur compounds added to 1l of soluble coffee**

| aroma compound | amount (µg)^{a} |
|---|---|
| **mixture I** | |
| 3-mercapto-2-butanone | 216 |
| 3-mercapto-2-pentanone | 366 |
| **mixture II** | |
| 4-methoxy-2-methylbutan-2-thiol | 0.84 |

| **mixture III** | |
|---|---|
| methional | 3.8 |
| 4-mercapto-4-methylbutylformate | 2.1 |

| | |
|---|---|
| ^{a}: Taking into account the odour thresholds of the compounds in pure soluble coffee, the added amounts for 3-mercapto-2-butanone and 3-mercapto-2-pentanone are by a factor of 2.5 and 1.9 times, respectively, above threshold, whereas that of e.g. 4-methoxy-2-methylbutan-2-thiol is 10 times above threshold. | |

**Sensory evaluations:** Soluble coffees were freshly prepared before each sensory session as follows: per 1000ml of soluble coffee beverage, 15g of soluble coffee were used. Soluble coffee powder was spiked with mixtures **I, II** or **III** and reconstituted with hot water (65°C). Solutions were equilibrated for 2 min. while stirring and then served to 8 trained panelists. Panelists were given a reference (non-spiked soluble coffee) and two coded samples per session and were asked to describe the differences in **above-cup** sensory profiles.

The results that are shown in Table 4 clearly demonstrate that the aroma providing substances 3-mercapto-2-butanone and 3-mercapto-2-pentanone perform best in terms of the increase of aroma notes such as catty-sulfury, roasty, fresh that relate to the freshly brewed coffee organoleptic properties.

**Table 4 Sensory description of above cup profiles of soluble coffees spiked with sulfur compounds as compared to a non-spiked reference coffee**

| **addition of** | **sensory description** |
|---|---|
| mixture I | more overall aroma, more sulfury^{a}, more fresh^{b}, more roasty, more full/complex |
| mixture II | more overall aroma, more sulfury^{c}, more full/complex |
| mixture III | no difference to reference |

| | |
|---|---|
| ^{a}: Often described as catty. ^{b}:Fresh in terms of fresh coffee character. ^{c}: Often described as blackcurrent. | |

### Example 3

Sensory evaluation of soluble coffees w and w/o aroma providing substances 3-mercapto-2-butanone and 3-mercapto-2-pentanone used in combination with 4-methoxy-2-methylbutan-2-thiol and/or with one or more of the compounds 4-mercapto-4-methyl-2-pentanone, methional, and 4-mercapto-4-methylbutyl formate were performed.

The pure soluble coffee and the preparation of the samples for the sensory evaluations was the same as described in Example 2. The composition of the mixtures that were added to the soluble coffee are summarized in **Table 5.** The applied amounts were optimized through a number of sensory experiments and provided us with the most desired sensory effects.

**Table 5 Amounts (µg) of sulphur compounds added to 11 of soluble coffee**

| aroma compound | amount (µg) |
|---|---|
| **mixture IV** | |
| 3-mercapto-2-butanone | 86.4 |
| 3-mercapto-2-pentanone | 146.4 |
| 4-methoxy-2-methylbutan-2-thiol | 0.84 |

| **mixture V** | |
|---|---|
| 3-mercapto-2-butanone | 86.4 |
| 3-mercapto-2-pentanone | 146.4 |
| 4-methoxy-2-methylbutan-2-thiol | 0.84 |
| methional | 3.8 |
| 4-mercapto-4-methylbutyl formate | 2.1 |

| **mixture VI** | |
|---|---|
| 3-mercapto-2-butanone | 86.4 |
| 3-mercapto-2-pentanone | 146.4 |
| 4-methoxy-2-methylbutan-2-thiol | 0.84 |
| 4-mercapto-4-methyl-2-pentanone | 0.10 |

Sensory evaluations were carried out as described in Example 2. The results that are shown in **Table 6** reveal that the mixtures impart fruity, blackcurrent-sulfury and fresh odour notes and can be used to increase the freshly brewed coffee organoleptic properties of the soluble coffee.

**Table 6 Sensory description of above cup profiles of soluble coffees spiked with sulfur compounds as compared to a non-spiked reference coffee**

| **addition of** | **sensory description** |
|---|---|
| mixture IV | more overall aroma, more sulfury^{a}, more fruity |
| mixture V | more overall aroma, more sulfury^{a}, more fresh^{b} |
| mixture VI | more overall aroma, more sulfury^{a}, more fresh, more full/complex, more smoky/ashy |

| | |
|---|---|
| ^{a}: Often described as blackcurrent. ^{b}: Fresh in terms of fresh coffee character. | |

## Claims

1. Use of an aroma-providing substance in an amount sufficient to increase the organoleptic properties of a coffee flavor provided in a food or beverage, **characterized in that** the aroma-providing substances is a straight chain C₄ -C₅ mercapto-allcanone or a mixture of two or more thereof.

2. Use according to claim 1, **characterized in that** the aroma-providing substance is 3-mercapto-2-butanone, 2-mercapto-3-pentanone, 3-mercapto-2-pentanone or a mixture of two or more thereof.

3. Use according to claim 1 or 2, **characterized in that** the aroma-providing substance is present in an amount effective to impart a catty-sulfury, fruity, roasty, odor character to increase the freshly brewed coffee organoleptic properties of the food or beverage.

4. Use according to any preceding claim in which the aroma-providing substance is used in combination with 4-methoxy-2-methylbutan-2-thiol and/or with one or more of the compounds 4-mercapto-4-methyl-2-pentanone, methional, and 4-mercapto-4-methylbutyl formate.

5. Use according to claim 4, **characterized in that** the one or more of the sulfur compounds is present in an amount effective to impart a fruity, blackcurrent-sulfury, odor character to increase the freshly brewed coffee organoleptic properties of the food or beverage.

6. A method for increasing the organoleptic properties of a coffee flavor provided in a food or beverage which comprises providing a food or beverage and adding or incorporating at least one isolated or synthesized aroma-providing substance in the food or beverage in an amount sufficient to increase the coffee flavor thereof, **characterized in that** the aroma-providing substance is a straight chain C₄ -C₅ mercapto alkanone or a combination of two or more thereof.

7. A food or beverage that comprises a consumable component and at least one isolated or synthesized aroma-providing substance in an amount sufficient to increase the organoleptic properties of coffee flavor in the food or beverage, **characterized in that** the isolated or synthesized aroma-providing substance is a mixture of two or more straight chain C₄ -C₅ mercapto alkanones.

8. A food or beverage according to claim 7, **characterized in that** the isolated or synthesized aroma-providing substance is a mixture of two or more of 3-mercapto-2-butanone, 2-mercapto-3-pentanone and 3-mercapto-2-pentanone.

9. A food or beverage according to claim 7 or 8, **characterized in that** it contains a mixture of the isolated or synthesized aroma-providing substance with 4-methoxy-2-methylbutan-2-thiol and/or with one or more of the compounds 4-mercapto-4-methyl-2-pentanone, methional, and 4-mercapto-4-methylbutyl formate,

10. A food or beverage according to any of claims 7 to 9, **characterized in that** the consumable component comprises a reconstitutable beverage, ready-to-drink beverage, alcoholic beverage, dough-based product, frozen confectionery product, chocolate or analogue thereof, cereal, or a spreadable dairy product or dairy substitute, or any mixture thereof.

## Patentansprüche

1. Verwendung einer aromaliefernden Substanz in einer Menge, die ausreicht, die organoleptischen Eigenschaften eines Kaffeearomas, das in einem Lebensmittel oder Getränk bereitgestellt wird, zu verstärken, **dadurch gekennzeichnet, dass** die aromaliefernde Substanz ein geradkettiges C₄-C₅ Mercaptoalkanon oder eine Mischung von zwei oder mehr davon ist.

2. Verwendung nach Anspruch 1, **dadurch gekennzeichnet, dass** die aromaliefernde Substanz 3-Mercapto-2-butanon, 2-Mercapto-3-pentanon, 3-Mercapto-2-pentanon oder eine Mischung von zwei oder mehr davon ist.

3. Verwendung nach Anspruch 1 oder 2, **dadurch gekennzeichnet, dass** die aromaliefernde Substanz in einer Menge vorhanden ist, die wirksam ist, einen katzenurinartigen-schwefligen, fruchtigen, gerösteten Geruchscharakter zu verleihen, um die organoleptischen Eigenschaften des Lebensmittels oder Getränks im Sinne eines frisch aufgebrühten Kaffees zu verstärken.

4. Verwendung nach irgendeinem vorausgehenden Anspruch, wobei die aromaliefernde Substanz in Kombination mit 4-Methoxy-2-methylbutan-2-thiol und/oder mit einer oder mehreren der Verbindungen 4-Mercapto-4-methyl-2-pentanon, Methional und 4-Mercapto-4-methylbutylformiat verwendet wird.

5. Verwendung nach Anspruch 4, **dadurch gekennzeichnet, dass** eine oder mehrere der Schwefelverbindungen in einer Menge vorhanden sind, die ausreicht, einen fruchtigen, schwarzen Johannisbeeren-ähnlichen schwefeligen Geruchscharakter zu verleihen, um die organoleptischen Eigenschaften des Lebensmittels oder Getränks im Sinne eines frisch aufgebrühten Kaffees zu verstärken.

6. Verfahren zur Erhöhung der organoleptischen Eigenschaften eines Kaffeearomas, das in einem Lebensmittel oder Getränk bereitgestellt wird, das die Bereitstellung eines Lebensmittels oder Getränks und die Zugabe oder Einarbeitung von wenigstens einer isolierten oder synthetisierten aromaliefernden Substanz in das Lebensmittel oder Getränk in einer Menge umfasst, die ausreicht, das Kaffeearoma zu verstärken, **dadurch gekennzeichnet, dass** die aromaliefernde Substanz ein geradkettiges C₄-C₅ Mercaptoalkanon oder eine Kombination von zwei oder mehr davon ist.

7. Lebensmittel oder Getränk, das einen konsumierbaren Bestandteil und wenigstens eine isolierte oder synthetisierte aromaliefernde Substanz in einer Menge umfasst, die ausreicht, die organoleptischen Eigenschaften eines Kaffeearomas in dem Lebensmittel oder Getränk zu verstärken, **dadurch gekennzeichnet, dass** die isolierte oder synthetisierte aromaliefernde Substanz eine Mischung aus zwei oder mehr geradkettigen C₄-C₅ Mercaptoalkanonen ist.

8. Lebensmittel oder Getränk nach Anspruch 7, **dadurch gekennzeichnet, dass** die isolierte oder synthetisierte aromaliefernde Substanz eine Mischung von zwei oder mehr von 3-Mercapto-2-butanon, 2-Mercapto-3-pentanon und 3-Mercapto-2-pentanon ist.

9. Lebensmittel oder Getränk nach Anspruch 7 oder 8, **dadurch gekennzeichnet, dass** es eine Mischung der isolierten oder synthetisierten aromaliefernden Substanz mit 4-Methoxy-2-methylbutan-2-thiol und/oder mit einer oder mehreren der Verbindungen 4-Mercapto-4-methyl-2-pentanon, Methional, und 4-Mercapto-4-methylbutylformiat enthält.

10. Lebensmittel oder Getränk nach irgendeinem der Ansprüche 7 bis 9, **dadurch gekennzeichnet, dass** der konsumierbare Bestandteil ein rekonstituierbares Getränk, ein trinkfertiges Getränk, ein alkoholisches Getränk, ein Produkt auf Teigbasis, ein gefrorenes Süßwarenprodukt, Schokolade oder Analoge davon, eine Cerealie, oder ein streichfähiges Milchprodukt oder Milchersatzprodukt oder irgendeine Mischung davon ist.

## Revendications

1. Utilisation d'une substance engendrant un arôme, en une quantité suffisante pour améliorer les propriétés organoleptiques d'un arôme de café présent dans un aliment ou une boisson, **caractérisée en ce que** la substance engendrant un arôme est une mercapto-alcanone en C₄ ou C₅ à chaîne droite ou un mélange de deux ou plus de deux de telles mercapto-alcanones.

2. Utilisation suivant la revendication 1, **caractérisée en ce que** la substance engendrant un arôme est la 3-mercapto-2-butanone, la 2-mercapto-3-pentanone, la 3-mercapto-2-pentanone ou un mélange de deux ou plus de deux de ces substances.

3. Utilisation suivant la revendication 1 ou 2, **caractérisée en ce que** la substance engendrant un arôme est présente en une quantité efficace pour conférer un caractère d'odeur aigre douce-soufrée, fruitée, de produit torréfié pour augmenter les propriétés organo-leptiques de café fraîchement infusé de l'aliment ou de la boisson.

4. Utilisation suivant l'une quelconque des revendications précédentes, dans laquelle la substance engendrant un arôme est utilisée en association avec du 4-méthoxy-2-méthylbutane-2-thiol et/ou avec un ou plusieurs des composés consistant en 4-mercapto-4-méthyl-2-pentanone, méthional et formiate de 4-mercapto-4-méthylbutyle.

5. Utilisation suivant la revendication 4, **caractérisée en ce que** le ou les composés soufrés sont présents en une quantité efficace pour conférer un caractère d'odeur fruitée, de cassis-soufrée afin d'augmenter les propriétés organoleptiques de café fraîchement infusé de l'aliment ou de la boisson.

6. Procédé pour augmenter les propriétés organoleptiques d'un arôme de café présent dans un aliment ou une boisson, qui comprend les étapes consistant à fournir un aliment ou une boisson et ajouter ou incorporer au moins une substance engendrant un arôme isolée ou synthétisée à l'aliment ou à la boisson en une quantité suffisante pour amplifier son arôme de café, **caractérisé en ce que** la substance engendrant un arôme est une mercapto-alcanone en C₄ ou C₅ à chaîne droite ou une association de deux ou plus de deux de telles mercapto-alcanones.

7. Aliment ou boisson qui comprend un constituant destiné à la consommation et au moins une substance engendrant un arôme isolée ou synthétisée en une quantité suffisante pour augmenter les propriétés organoleptiques d'arôme de café dans l'aliment ou la boisson, **caractérisé en ce que** la substance engendrant un arôme isolée ou synthétisée est un mélange de deux ou plus de deux mercapto-alcanones en C₄ ou C₅ à chaîne droite.

8. Aliment ou boisson suivant la revendication 7, **caractérisé en ce que** la substance engendrant un arôme isolée ou synthétisée est un mélange de deux ou plus de deux des substances consistant en 3-mercapto-2-butanone, 2-mercapto-3-pentanone et 3-mercapto-2-pentanone.

9. Aliment ou boisson suivant la revendication 7 ou 8, **caractérisé en ce qu'**il contient un mélange de la substance engendrant un arôme isolée ou synthétisée avec du 4-méthoxy-2-méthylbutane-2-thiol et/ou avec un ou plusieurs des composés consistant en 4-mercapto-4-méthyl-2-pentanone, méthional et formiate de 4-mercapto-4-méthylbutyle.

10. Aliment ou boisson suivant l'une quelconque des revendications 7 à 9, **caractérisé en ce que** le constituant destiné à la consommation comprend une boisson reconstituable, une boisson prête à la consommation, une boisson alcoolisée, un produit à base de pâte, un produit de confiserie congelé, le chocolat ou une substance analogue, une céréale, ou un produit laitier à tartiner ou succédané de produit laitier à tartiner, ou n'importe lequel de leurs mélanges.
